(19) Europäisches Patentamt
European Patent Office
Office européen des brevets

(11) **EP 4 647 454 A1**

(12) **EUROPÄISCHE PATENTANMELDUNG**

(43) Veröffentlichungstag:
**12.11.2025   Patentblatt 2025/46**

(21) Anmeldenummer: 24174329.3

(22) Anmeldetag: **06.05.2024**

(51) Internationale Patentklassifikation (IPC):
*C08G 18/40* (2006.01)     *C08G 18/42* (2006.01)
*C08G 18/76* (2006.01)     *C08K 5/521* (2006.01)

(52) Gemeinsame Patentklassifikation (CPC):
**C08G 18/4018; C08G 18/4211; C08G 18/7664;**
C08G 2110/0025; C08K 5/521

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG
51373 Leverkusen (DE)**

(72) Erfinder: **Die Erfindernennung liegt noch nicht
vor**

(74) Vertreter: **Levpat
c/o Covestro AG
Gebäude K12
51365 Leverkusen (DE)**

(54) **POLYOLFORMULIERUNGEN UND EIN VERFAHREN ZUR HERSTELLUNG VON PUR/
PIR-HARTSCHAUMSTOFFEN AUF BASIS DIESER POLYOLFORMULIERUNGEN**

(57)   Die vorliegende Erfindung betrifft flammgeschützte Polyolformulierungen enthaltend halogenfreie
flüssige Flammschutzmittel auf Phosphor-Basis und Verbindungen, welche sowohl über eine Esterals auch über
eine Carbonsäurefunktion verfügen, und ein Verfahren
zur Herstellung von Polyurethan-/Polyisocyanurat-Hart-
schaumstoffen unter Verwendung dieser Polyolformulierung und die hiermit hergestellten PUR/PIR-Hart-
schaumstoffe.

**Beschreibung**

Die vorliegende Erfindung betrifft flammgeschützte Polyolformulierungen enthaltend halogenfreie flüssige Flammschutzmittel auf Phosphor-Basis. Die vorliegende Erfindung betrifft ebenfalls ein Verfahren zur Herstellung von Polyurethan-/Polyisocyanurat-Hartschaumstoffen (im Folgenden auch als "PUR/PIR-Hartschaumstoffe" bezeichnet) unter Verwendung dieser Polyolformulierung und die hiermit hergestellten PUR/PIR-Hartschaumstoffe.

PUR/PIR-Hartschaumstoffe werden durch die Umsetzung einer Polyol-haltigen isocyanatreaktiven Komponente mit einem molaren Überschuss an Isocyanaten in Gegenwart eines Treibmittels hergestellt und enthalten neben Urethan - auch Isocyanuratstrukturen und werden insbesondere in flammgeschützten Dämmstoffen verwendet.

Triethylphosphat (TEP) wird seit einiger Zeit verstärkt in PUR/PIR-Hartschaumstoffen eingesetzt, um halogenierte Flammschutzmittel, z.B. halogenierte Phosphorverbindungen, wie insbesondere Tris(2-chlorisopropyl)phosphat (TCPP), zu ersetzen. Der Einsatz halogenierter Verbindungen wie TCPP ist unter anderem aus ökologischen Gründen zunehmend in Kritik geraten. Führt man jedoch einen reinen Austausch von TCPP durch TEP durch, zeigen sich Nachteile im Eigenschaftsprofil der PUR/PIR - Schaumstoffe: so weist bei gleichem Phosphorgehalt der Schaum enthaltend TEP statt TCPP in der Regel ein schlechteres Brandverhalten auf. Eine Erhöhung der TEP - Menge wiederum führt zu nachteiligen Effekten bei den mechanischen Eigenschaften.

In EP 1 288 239 A und EP 1421131 A wird ein Verfahren zur Herstellung von urethanmodifiziertem Polyisocyanurat-Hartschaum offenbart, umfassend den Schritt des Umsetzens eines organischen Polyisocyanats mit einer polyfunktionellen isocyanat-reaktiven Komponente in Gegenwart eines Treibmittels und eines Katalysators. Der Prozess ist dadurch gekennzeichnet, dass er in Gegenwart einer funktionalisierten Carbonsäure durchgeführt wird, welche mindestens eine funktionelle OH-, SH-, $NH_2$- oder NHR-Gruppe enthält, worin R eine Alkyl-, Cycloalkyl- oder Arylgruppe ist, also neben der Carbonsäurefunktion noch eine H-acide Gruppe enthält. Als besonders bevorzugt genannt und in den Beispielen verwendet werden Milchsäure und Salicylsäure. Nachteilig an der Verwendung dieser beiden Säuren ist unter anderem, dass sie Feststoffe sind, d.h. dass für die Verarbeitung immer ein Lösungsmittel benötigt wird.

WO 2023/208626 A1 setzt Carbonsäureamide oder Amin-haltige Carbonsäuren als Treibmittel in TCPP - haltigen Formulierungen ein.

Aufgabe der hier geschilderten Erfindung ist es, die Flammwidrigkeit von PUR/PIR - Hartschaumstoffen enthaltend ein bei 25 °C flüssiges, halogenfreies Phosphor-basiertes Flammschutzmittel zu verbessern, und zwar insbesondere die Verkohlungseigenschaften, welche anhand des Verkohlungsrückstandes im Cone Kalorimeter Test bestimmt werden.

Diese Aufgabe konnte überraschenderweise gelöst werden durch die Umsetzung einer Polyisocyanatkomponente **B** mit einer erfindungsgemäßen Komponente A, welche folgende Komponenten enthält:

**A1)** eine isocyanatreaktive Komponente, enthaltend

**a1)** eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis ≤ 300 mg KOH/g und einer mittleren Funktionalität von 1,8 bis 2,5 und einer mittleren Säurezahl von < 5 mg KOH/g, wobei mindestens 50 Gew.-% der Polyolverbindungen a1) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen,

**a2)** eine Mischung bestehend aus mindestens einer nicht-esterhaltigen Polyhydroxyverbindung P mit einer mittleren Hydroxylzahl von ≥ 280 bis 1850 mg KOH/g und mindestens einer Verbindung H, welche sowohl über eine Ester - als auch über eine freie Carbonsäurefunktion verfügt und wobei die Mischung a2) eine mittlere Säurezahl von 10 bis 400 mg KOH/g und eine mittlere Hydroxylzahl von 100 bis 1400 mg KOH/g aufweist,

**a3)** optional weitere Polyole ausgewählt aus der Gruppe bestehend aus Polyesterpolyolen und Polyetheresterpolyolen, welche nicht unter die Definition von a1) und / oder a2) fallen, Polyetherpolyolen, Polyethercarbonatpolyolen, Polyestercarbonatpolyolen,

**a4)** optional niedermolekulare isocyanatreaktive Verbindungen, welche nicht unter die Definition von a1), a2) oder a3) fallen,

**A2)** optional Katalysatoren,

**A3)** optional Wasser,

**A4)** ein bei 25 °C flüssiges, nicht halogeniertes Phosphor-basiertes Flammschutzmittel,

**A5)** optional weitere Hilfsmittel und Zusatzstoffe, die nicht unter die Definition von A1) bis A4) fallen,

wobei A eine mittlere Säurezahl von ≥ 3,5 mg KOH/g aufweist und keine halogenierten Flammschutzmittel enthält.

Die OH-Zahl (auch: Hydroxylzahl) gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Das Äquivalentgewicht gibt das Verhältnis der zahlenmittleren Molekularmasse und der Funktionalität der isocyanatreaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Die Säurezahl wird bestimmt gemäß DIN EN ISO 2114 (November 2006).

Der NCO-Wert (auch: NCO-Gehalt, Isocyanatgehalt) wird bestimmt mittels EN ISO 11909 (Mai 2007).

Die "Viskosität" bzw. "dynamische Viskosität" bezeichnet im Rahmen der vorliegenden Erfindung die dynamische Viskosität, welche bestimmt werden kann entsprechend DIN 53019-1 (September 2008).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und Komponenten.

Die Polyesterpolyole, die für die Komponente a1) verwendet werden, sind unter anderem Polykondensate aus Di- sowie weiterhin Tri-, und Tetraolen und Di- sowie weiterhin Tri- und Tetracarbonsäuren oder Hydroxycarbonsäuren oder Lactonen, bevorzugt werden aromatische Dicarbonsäuren oder Gemische aus aromatischen und aliphatischen Dicarbonsäuren verwendet. Unter "aromatischen Polyestern" versteht man dabei solche Polyester, zu deren Herstellung nur Polycarbonsäuren eingesetzt werden, welche einen aromatischen Anteil aufweisen. Unter "aromatisch/aliphatischen Polyestern" werden solche Polyester verstanden, zu deren Herstellung aromatische und aliphatische Polycarbonsäuren eingesetzt werden. Dies gilt analog auch für die unten beschriebenen Polyetheresterpolyole. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als aromatische Polycarbonsäuren können beispielsweise Phthalsäure, Isophthalsäure, Terephthalsäure, Trimellithsäure, Trimesinsäure (1,3,5-Benzoltricarbonsäure), Pyromellithsäure und/oder Derivate der Terephthalsäure, wie beispielsweise Polyalkylenterephthalate eingesetzt werden, insbesondere Phthalsäure und /oder Terephthalsäure und ihre Isomere und Derivate.

Beispiele für aliphatische Polycarbonsäuren sind Cyclohexandicarbonsäure, Endomethylentetrahydrophthalsäure, Adipinsäure, Azelainsäure, Sebacinsäure, Glutarsäure, Maleinsäure, Fumarsäure, Itaconsäure, Korksäure, Bernsteinsäure, 2-Methylbernsteinsäure, 3,3-Diethylglutarsäure, 2,2-Dimethylbernsteinsäure, Dodekandisäure, Dimerfettsäure, Trimerfettsäure und/oder Zitronensäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Rizinolsäure, Hydroxystearinsäure und dergleichen. Geeignete Lactone sind unter anderem Caprolacton, Butyrolacton und Homologe. In einer bevorzugten Ausführungsform werden keine Hydroxycarbonsäuren und / oder deren Derivate eingesetzt.

Verwendet werden können ebenso Derivate dieser Carbonsäuren, wie beispielsweise Dimethylterephthalat.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure und Ölsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren. Der anteilige Einsatz der oben genannten biobasierten Ausgangsstoffe, insbesondere von Fettsäuren bzw. Fettsäurederivaten (Ölsäure, Sojaöl etc.) kann Vorteile aufweisen, z.B. im Hinblick auf Lagerstabilität der Polyolformulierung, Dimensionsstabilität, Brandverhalten und Druckfestigkeit der Schäume.

Die Carbonsäuren können dabei sowohl einzeln als auch im Gemisch verwendet werden. Als Carbonsäuren werden bevorzugt Phthalsäureanhydrid, Terephthalsäure und/oder Isophthalsäure sowie Adipinsäure, Glutarsäure, Sebacinsäure und/oder Bernsteinsäure, und deren Mischungen verwendet.

Die Carbonsäuren werden für die Polyestersynthese mit Polyhydroxyverbindungen, insbesondere Diolen, Triolen und / oder Tetraolen umgesetzt.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere und Neopentylglykol. Vorzugsweise verwendet werden Ethylenglykol und/oder Diethylenglykol.

Daneben können auch Polyhydroxyverbindungen wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind. Es können zusätzlich auch einwertige Alkanole mit verwendet werden.

Verwendbare Polyetheresterpolyole sind solche Verbindungen, die Ethergruppen, Estergruppen und OH-Gruppen enthalten.

Als Komponenten für die Polyetheresterpolyolherstellung werden ebenfalls bevorzugt die oben beschriebenen ein - und mehrwertigen Carbonsäuren und Alkohole bzw. deren reaktiven Derivate eingesetzt.

Zusätzlich werden als weitere Komponente zur Herstellung der Polyetheresterpolyole Polyetherpolyole eingesetzt, die man beispielsweise durch Alkoxylieren von Startermolekülen wie mehrwertigen Alkoholen (im Folgenden auch mit "Polyhydroxyverbindungen" bezeichnet) erhält. Die Startermoleküle sind mindestens difunktionell, können aber gegebenenfalls auch Anteile höherfunktioneller, insbesondere trifunktioneller, Startermoleküle enthalten. Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Polyethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel die Polyhydroxyverbindungen 1,1,1-Trimethylolpropan, Triethanolamin, Glycerin, Sorbitan, Sorbitol und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid. Die Herstellungsverfahren von Poly(ether)esterpolyolen sind dem Fachmann bekannt.

In einer bevorzugten Ausführungsform werden für die Herstellung der Polyesterpolyole bzw. Polyetheresterpolyole rezyklierte Ausgangsstoffe eingesetzt, beispielsweise rezykliertes Polyethylenterephthalat ("rPET"). Insbesondere kann die Komponente a1) ein Polyesterpolyol enthalten, welches aus rezykliertem Polyethylenterephthalat hergestellt ist.

Im Weiteren werden Polyesterpolyole und Polyetheresterpolyole einzeln oder gemeinsam mit dem Begriff "Poly(ether)esterpolyole" bezeichnet.

Die Komponente a1) umfasst mindestens 50 Gew.-% aromatisches oder aromatisch/aliphatisches Poly(ether)esterpolyol. Dies bedeutet, dass die Komponente a1) einen aromatischen Anteil aufweist. In einer bevorzugten Ausführungsform sind mehr als 60 Gew.-% der Komponente a1) aromatische oder aromatisch/aliphatische Polyesterpolyole und/oder Polyetheresterpolyole, insbesondere mehr als 80 Gew.-%, und ganz besonders bevorzugt besteht die Komponente a1) aus aromatischen und/oder aromatisch/aliphatischen Polyesterpolyolen und/oder Polyetheresterpolyolen.

Die Polyole der Komponente a1) weisen mittlere Funktionalitäten von $\geq 1,8$ bis $\leq 2,5$, und eine Hydroxylzahl zwischen 150 bis 300 mg KOH/g, besonders bevorzugt 160 bis 270 mg KOH/g und insbesondere bevorzugt von 180 - 260 mg KOH/g und eine Säurezahl von < 5 mg KOH/g, vorzugsweise von < 3 mg KOH/g auf. Vorzugsweise besitzen die Polyole mehr als 70 mol%, bevorzugt mehr als 80 mol%, insbesondere mehr als 90 mol%, primäre OH-Gruppen.

A1) enthält neben der Komponente a1) die Komponente a2). Bei der Komponente a2) handelt es sich um eine Mischung bestehend aus mindestens einer nicht-esterhaltigen Polyhydroxyverbindung P mit einer mittleren Hydroxylzahl von $\geq 280$ bis 1850 mg KOH/g und einer Verbindung H ausgewählt aus der Gruppe von Estern aliphatischer und / oder aromatischer Polycarbonsäuren mit einer Polyhydroxyverbindung P, wobei die Verbindungen H neben der bzw. den Esterfunktionen noch eine oder mehrere freie Carbonsäurefunktionen aufweisen, und wobei die Komponente a2) eine mittlere Säurezahl von 10 bis 400 mg KOH/g und eine mittlere Hydroxylzahl von 100 bis 1400 mg KOH/g aufweist.

"Verbindung H" im Sinne dieser Anmeldung bedeutet, dass bei Dicarbonsäuren eine Säurefunktion verestert ist, bei Polycarbonsäuren mit n Säurefunktionen maximal n-1 der Säurefunktionen verestert sind. In einer bevorzugten Ausführungsform handelt es sich bei der Verbindung H um einen Halbester einer Dicarbonsäure.

Beispiele für geeignete Polyhydroxyverbindungen P zur Verwendung in der Komponente a2) und für die Herstellung der Verbindung H sind z.B. Diole, Triole oder Polyole, z.B. Ethylenglykol, Diethylenglykol, Triethylenglykol, Tetraethylenglykol, Polyethylenglykol, 1,2- und 1,3-Propandiol, 1,3- und 1,4-Butandiol, 1,6- Hexandiol, 1,8-Octandiol, Neopentylglykol, 1,4-Bishydroxymethylcyclohexan, 2-Methyl-l,3-propandiol, 2,2,4-Trimethylpentandiol-l,3, Dipropylenglykol, Polypropylenglykole, Dibutylenglykol und Polybutylenglykole. Die eingesetzten Alkohole sind bevorzugt frei von weiteren funktionellen Gruppen, insbesondere enthalten sie keine N-haltigen Gruppen wie $NH_2$-,NHR- oder $NR_2$-Gruppen. Bevorzugt sind Ethylenglykol, Diethylenglykol, Triethylenglykol, Tetraethylenglykol, Polyethylenglykol, 1,2-Propandiol, Dipropylenglykol und Polypropylenglykol, insbesondere bevorzugt Ethylenglykol, Diethylenglykol, Triethylenglykol und Polyethylenglykol und ganz besonders bevorzugt Diethylenglykol und Polyethylenglykol.

Für die Herstellung der Verbindung H geeignet sind grundsätzlich alle bereits hierin für die Polyester- und Polyetherestersynthese beschriebenen aliphatischen und / oder aromatischen Polycarbonsäuren und deren Derivate, sofern sie nach einer Umsetzung mit der Polyhydroxyverbindung P noch mindestens eine freie Säurefunktion aufweisen. Bevorzugt werden aromatische Dicarbonsäuren oder Gemische aus aromatischen und aliphatischen Dicarbonsäuren und/oder deren Anhydride eingesetzt.

Die eingesetzten Polycarbonsäuren und -anhydride weisen bevorzugt keine funktionelle Gruppen ausgewählt aus der Gruppe bestehend aus OH-, SH-, $NH_2$- oder NHR-Gruppen, worin R eine Alkyl, Cycloalkyl- oder Arylgruppe ist, auf.

Bevorzugt handelt es sich bei der Polycarbonsäure um Bernsteinsäure, Adipinsäure, Phthalsäure und / oder Terephthalsäure.

Besonders geeignete Carbonsäureanhydride sind z.B. Maleinsäureanhydrid, Bernsteinsäureanhydrid, Octenylbernsteinsäureanhydrid, Itaconsäureanhydrid, Citraconsäureanhydrid, Diglycolsäureanhydrid, Hexahydrophthalsäureanhydrid, Endomethylentetrahydrophthalsäure-anhydrid, Trimellitsäureanhydrid, Hemimellitsäureanhydrid, Pyromellitsäureanhydrid, Mellitsäureanhydrid und / oder Phthalsäureanhydrid, insbesondere um Maleinsäureanhydrid oder Phthalsäureanhydrid und ganz besonders bevorzugt um Phthalsäureanhydrid.

Ganz besonders bevorzugt handelt es sich bei der Verbindung H um ein Umsetzungsprodukt aus Maleinsäureanhydrid und / oder Phthalsäureanhydrid mit Ethylenglykol und / oder Diethylenglykol und / oder Polyethylenglykolen, insbesondere um das Reaktionsprodukt aus Phthalsäureanhydrid mit Diethylenglykol.

Die Komponente a2) weist eine mittlere Säurezahl von 10 bis 400 mg KOH/g, bevorzugt von 20 bis 250 mg KOH/g, insbesondere bevorzugt von 50 bis 150 mg KOH/g und eine mittlere OH-Zahl von 100 bis 1400 mg KOH/g, bevorzugt von 150 bis 1000 mg KOH/g und insbesondere bevorzugt von 300 bis 800 mg KOH/g auf.

Die Konzentration der Komponente a2) in der Komponente A1 ist so hoch, dass die Komponente A eine mittlere Säurezahl $\geq$ 3,5 mg KOH/g, bevorzugt von 3,5 bis 6 mg KOH/g, besonders bevorzugt 3,5 bis 5 mg KOH/g aufweist. Die hierfür benötigte Menge an Komponente a2) ist für einen Fachmann einfach über die Bestimmung der Säurezahl der Komponente A1) oder A) ohne Zusatz der Komponente a2) zu ermitteln.

Neben den Polyester- und Polyetheresterpolyolen a1) und der Komponente a2) kann die isocyanatreaktive Komponente A1) weitere Komponenten enthalten, z.B. Polyole a3), die nicht unter die Definition von a1) bzw. a2) fallen, dem kundigen Fachmann aber aus der Polyurethanchemie bekannt sind.

Beispielsweise können Polyetherpolyole eingesetzt werden, welche nach dem Fachmann bekannten Herstellungsmethoden erhalten werden, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan. Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Bevorzugt enthalten die Polyole der Komponente a3) Polyole ausgewählt aus Polyetherpolyolen mit einer OH-Zahl von 10 bis 80 KOH/g und einer mittleren Funktionalität von ≥ 2,0 bis ≤3,0, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO. Diese Polyole sind bevorzugt in einer Menge von 5,0 - 15 Gew.-% (insbesondere 8,0 - 12 Gew.-%) in der Komponente A1 enthalten.

Auch können in der isocyanatreaktiven Komponente A1 niedermolekulare isocyanatreaktive Verbindungen a4) enthalten sein, insbesondere können di- oder trifunktionelle Amine und Alkohole, besonders bevorzugt Diole und/oder Triole mit Molmassen kleiner als 400 g/mol, vorzugsweise von 60 bis 300 g/mol, zum Einsatz kommen, z.B. Triethanolamin, Diethylenglykol, Ethylenglykol und Glycerin. Sofern zur Herstellung der Polyurethan-Hartschaumstoffe solche niedermolekularen isocyanatreaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente A1, zum Einsatz.

Neben den oben beschriebenen Polyolen und isocyanatreaktiven Verbindungen können in der Komponente A1 weitere isocyanatreaktive Verbindungen enthalten sein, beispielsweise Graft-Polyole, Polyamine, Polyaminoalkohole und Polythiole. Selbstverständlich umfassen die beschriebenen isocyanatreaktiven Komponenten auch solche Verbindungen mit gemischten Funktionalitäten.

Die isocyanatreaktive Komponente A1) enthält mindestens 20 Gew.-%, bevorzugt mindestens 50 Gew.-% Polyolverbindungen a1) und enthält mindestens eine Komponente a2), und kann weiterhin eine oder mehrere der oben beschriebenen Komponenten a3) und a4) enthalten.

Die isocyanatreaktive Komponente A1) enthält besonders bevorzugt keine Carbonsäuren, welche eine oder mehrere funktionelle Gruppen ausgewählt aus der Gruppe bestehend aus OH-, SH-, $NH_2$- und NHR-Gruppen enthalten, und welche nicht im gleichen Molekül auch eine oder mehrere Estergruppen aufweisen.

Bevorzugt enthält die Komponente A1 mindestens 50 Gew.-% an aromatischen oder aromatisch/aliphatischen Polyolen, insbesondere 50 Gew.-%, besonders bevorzugt 60 Gew.-% und ganz besonders bevorzugt 65 - 75 Gew.-% aromatische oder aromatisch/aliphatische Polyesterpolyole und/oder Polyetheresterpolyole. In diesem Bereich weist die Reaktionsmischung eine gute Kombination aus Verarbeitungs- und Brandeigenschaften auf.

Als Katalysator A2) zur Herstellung der PUR/PIR-Hartschaumstoffe werden Verbindungen verwendet, welche die Reaktion der reaktiven Wasserstoffatome, insbesondere Hydroxylgruppen enthaltenden Verbindungen mit der Polyisocyanatkomponente B beschleunigen, wie z. B. tertiäre Amine oder Metallsalze. Die Katalysatorkomponenten können dem Reaktionsgemisch zudosiert oder auch ganz oder teilweise in der isocyanatreaktiven Komponente A1) vorgelegt werden.

Verwendet werden beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator A2) kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Wasser (A3) ist häufig in den Ausgangsstoffen als Restfeuchte vorhanden oder kann der Formulierung zugesetzt werden. Wasser wirkt als chemisches Treibmittel.

Die Komponente A enthält ein bei 25 °C flüssiges, halogenfreies und phosphorhaltiges Flammschutzmittel. Dies umfasst beispielsweise halogenfreie Phosphate wie z. B. Triethylphosphat (TEP), Trikresylphosphat, Diphenylkresylphosphat (DPK), tert-Butylphenyldiphenylphosphat, Resorcinyldiphenylphosphat (auch als Oligomer), sowie polymere Reaktionsprodukte aus Phosphorylchlorid mit Alkoholen, z.B. mit Diethylenglykol und Isobutanol (Levagard 3000), und Phosphonate, z.B. Diethylethylphosphonat (DEEP), Dimethylpropylphosphonat (DMPP), Veriquel® R100 bzw. "E06-16" von der Fa. ICL, und auch gemischte Phosphonate wie Ethylbutylhydroxymethylphosphonat . Bevorzugt sind Triethylphosphat und polymere Reaktionsprodukte aus Phosphorylchlorid mit Diethylenglykol wie Levagard 3000. Besonders bevorzugt ist TEP.

Gegebenenfalls können ein oder mehrere Hilfs- und Zusatzstoffe (Additive) als Komponente A5 eingesetzt werden. Beispiele für die Komponente A5 sind oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrisotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern. Bevorzugt werden keine Füllstoffe verwendet.

Die isocyanatreaktive Komponente A ist bevorzugt im Wesentlichen auf die oben beschriebenen Komponenten A1) - A5) beschränkt. "Im Wesentlichen" bedeutet hierbei im Sinne dieser Anmeldung, dass weitere Komponenten, z.B. technische Verunreinigungen, andere reaktive oder nicht reaktive Verbindungen, Lösungsmittel oder ähnliches maximal in einem Gehalt von bis zu 10 Gew.-%, bevorzugt maximal bis zu 5 Gew.-%, insbesondere maximal bis zu 2 Gew.-% enthalten sind.

In einer bevorzugten Ausführungsform enthält die isocyanatreaktive Komponente A: eine isocyanatreaktive Komponente A1), enthaltend

> 20 Gew.-% (bevorzugt 45 - 90 Gew.-%, besonders bevorzugt 50 - 80 Gew.-%), bezogen auf die Komponente A, der Komponente a1),

≥ 0 Gew.-% (bevorzugt 1 - 10 Gew.-%, besonders bevorzugt 2 - 5 Gew.-%), bezogen auf die Komponente A, der Komponente a2),

≥ 0 Gew.-% (bevorzugt 1 - 20 Gew.-%, besonders bevorzugt 5 - 15 Gew.-%), bezogen auf die Komponente A, der Komponente a3),

0,0 - 5,0 Gew.-%, bezogen auf die Komponente A, der Komponente a4), und

0,0 - 5,0 Gew.-%, bezogen auf die Komponente A, der Komponente A2,

0 - 1,2 Gew.-%, bevorzugt 0,3 - 1,0 Gew.-%, bezogen auf die Komponente A, Wasser A3,

> 0 Gew.-%, bevorzugt 5 - 20 Gew.-%, besonders bevorzugt 7 - 15 Gew.-%, bezogen auf die Komponente A, der Komponente A4,

0,0 - 10,0 Gew.-% (bevorzugt 0,0 - 6 Gew.-%), bezogen auf die Komponente A, der Komponente A5.

Die Erfindung betrifft ebenfalls ein Reaktionsgemisch, welches aus der isocyanatreaktiven Komponente A und einer Polyisocyanatkomponente B hergestellt wird. Die Kennzahl des Reaktionsgemisches beträgt > 150, insbesondere > 180, bevorzugt > 220, in einer ganz besonders bevorzugten Ausführungsform beträgt die Kennzahl 290 - 440.

Für die Herstellung von PUR/PIR-Hartschäumen wird das Reaktionsgemisch in Gegenwart von C Treibmitteln, insbesondere enthaltend eine oder mehrere Verbindungen ausgewählt aus der Gruppe bestehend aus halogenfreien physikalischen Treibmitteln und (hydro)fluorierten Olefinen, umgesetzt.

Die Erfindung betrifft ebenfalls ein Verfahren zur Umsetzung der erfindungsgemäßen isocyanatreaktiven Komponente A mit

B einer Polyisocyanatkomponente

in Gegenwart von

C Treibmitteln, enthaltend eine oder mehrere Verbindungen ausgewählt aus der Gruppe bestehend aus halogenfreien physikalischen Treibmitteln und (hydro)fluorierten Olefinen,

zu PUR/PIR-Hartschaumstoffen.

Als geeignete Polyisocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (monomeres MDI) und/oder höhere Homologe (oligomeres MDI), 1,3- und/oder I,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Mischungen aus oligomerem und gegebenenfalls monomerem MDI werden auch "polymeres MDI" genannt. Bevorzugt wird die Polyisocyanatkomponente **B** ausgewählt aus mindestens einer Verbindung aus der Gruppe bestehend aus polymerem MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-I,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Polyisocyanatkomponente **B** eingesetzt werden. Die Präpolymere sind herstellbar durch Umsetzung eines oder mehrerer Polyisocyanate mit einem oder mehreren Polyolen, entsprechend den unter den isocyanatreaktiven Komponenten **A** beschriebenen Polyolen.

Die Herstellung der erfindungsgemäßen PUR/PIR-Hartschaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden.

Das Treibmittel C kann einer der Komponenten A oder B, insbesondere A, zudosiert werden oder bei der Vermischung zugegeben werden. Als Treibmittel wird mindestens eine Verbindung, ausgewählt aus der Gruppe bestehend aus physikalischen und chemischen Treibmitteln, eingesetzt.

Physikalische Treibmittel C sind beispielsweise niedrig siedende organische Verbindungen, wie z.B. Kohlenwasserstoffe, Ether, Ketone, Carbonsäureester oder Kohlensäureester. Geeignet sind insbesondere organische Verbindungen, welche gegenüber der Polyisocyanatkomponente B inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und. Auch möglich, aber nicht bevorzugt, ist der Einsatz von (hydro) fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer bevorzugten Ausführungsform wird eine Mischung aus Wasser und einem physikalischen Treibmittel eingesetzt. Bevorzugt werden keine halogenierten Treibmittel eingesetzt.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an isocyanatreaktiven Gruppen, multipliziert mit 100, verstanden:

$$\text{Kennzahl} = (\text{Mole Isocyanat-Gruppen} / \text{Mole isocyanatreaktive Gruppen}) * 100$$

Die Erfindung betrifft ebenfalls einen PUR/PIR-Hartschaumstoff, der durch das erfindungsgemäße Verfahren hergestellt ist. Die erfindungsgemäßen PUR/PIR-Hartschaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Der erfindungsgemäße PUR/PIR-Hartschaumstoff weist insbesondere eine Rohdichte von $\leq$ 45 kg/m$^3$ auf (bestimmt gemäß DIN EN ISO 3386-1 (Oktober 2015)).

Ein weiterer Gegenstand der Erfindung ist demzufolge die Verwendung eines erfindungsgemäßen PUR/PIR-Hartschaumstoffes als Isolationsschaumstoff und/oder als Haftvermittler in Verbundelementen, wobei die Verbundelemente eine einen erfindungsgemäßen PUR/PIR-Hartschaumstoff umfassende Schicht und mindestens eine Deckschicht umfassen. Die Deckschicht wird hierbei zumindest teilweise von einer den erfindungsgemäßen PUR/PIR-Hartschaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln. Insbesondere handelt es sich bei mindestens einer Deckschicht um eine Deckschicht aus Metall (Metallverbundelement).

**Beispiele**

1. Methoden und Begriffe

OH-Zahl: Die Bestimmung der OH-Zahl (Hydroxylzahl) erfolgte gemäß der Vorschrift der DIN 53240-1 (Verfahren ohne Katalysator, Juni 2013).

Säurezahl: Die Bestimmung der Säurezahl erfolgte gemäß DIN EN ISO 2114 (November 2006).

Viskosität: Die dynamische Viskosität wird gemessen mit einem Rheometer MCR 51 der Firma Anton Paar entsprechend DIN 53019-1 (September 2008) mit einem Messkegel CP 50-1, Durchmesser 50 mm, Winkel 1° bei Scherraten von 25, 100, 200 und 500 s-1.

Kennzahl: Bezeichnet das mit 100 multiplizierte molare Verhältnis von NCO- zu NCOreaktiven Gruppen einer Rezeptur

Rohdichte: Die Rohdichte wurde gemäß DIN EN ISO 3386-1 (Oktober 2015) bestimmt.

Maximale mittlere Flammhöhe: Die maximale mittlere Flammhöhe wurde nach DIN EN ISO 11925-2 (Februar 2020) bestimmt. Die Einstufung der Brandklasse erfolgt nach DIN EN 13501-1 (Mai 2019).

Expansion im Cone Kalorimeter: Die Expansion der Schaumprobekörper wurde anhand von 10 x 10 x 5 cm Probekörpern (L/B/H) getestet nach ISO 5660-1 (2015+Amd. 2019) für 10 Minuten bei 25 kW/m$^2$ Wärmefluss bestimmt. Die Expansion der Probekörper wurden anhand des Probekörperquerschnittes in Höhenrichtung nach der Prüfung bestimmt.

2. Materialien

| | |
|---|---|
| Maleinsäureanhydrid | der Fa. Sigma Aldrich |
| Phthalsäureanhydrid | der Fa. Polynt GmbH |
| Milchsäure | der Fa. Sigma Aldrich |

(fortgesetzt)

| Diethylenglykol | der Fa. Brenntag GmbH |
|---|---|

Polyesterpolyol a1-1 Polyesterpolyol der Fa. Covestro Deutschland AG auf Basis von Phthalsäureanhydrid, Adipinsäure, Ethylenglykol und Diethylenglykol mit einer OH-Zahl von 240 mg KOH/g und einer Säurezahl von 2,0 mg KOH/g

Polyesterpolyol a1-2 Stepanpol PS 2352 der Fa. Stepan mit einer OH-Zahl von 240 mg KOH/g und einer Säurezahl von 1 mg KOH/g.

Komponente a2-1: Halbester aus Phthalsäureanhydrid und Diethylenglykol in Diethylenglykol, mit einer OH-Zahl von 795 mg KOH/g und einer Säurezahl von 97 mg KOH/g (Fa. Covestro Deutschland AG)

Polyetherpolyol a3-1 aliphatisches Polyetherpolyol der Fa. Covestro Deutschland AG auf Basis von Propylenglykol, Ethylenoxid und Propylenoxid im Verhältnis 30 %/70 % mit einer OH-Zahl von 28 mg KOH/g und einer Funktionalität von 2

Polyetherpolyol a3-2 Polyetherpolyol der Fa. Covestro Deutschland AG auf Basis von ortho-Toluoldiamin, Ethylenoxid und Propylenoxid mit einer OH-Zahl von 415 mg KOH/g und einer Funktionalität von 4.

Polyetherpolyol a3-3 Polyetherpolyol der Fa. Covestro Deutschland AG auf Basis von Sucrose, Ethylenglykol, Propylenglykol und Propylenoxid mit einer OH-Zahl 380 mg KOH/g und einer Funktionalität von 4,6.

Polyetherpolyol a3-4 PEG 400 der Fa. Oqema GmbH mit einer OH-Zahl von 280 mg KOH/g und einer Funktionalität von 2

| TEP | Triethylphosphat der Fa. Lanxess GmbH |
|---|---|
| TCPP | Tris(1-chloro-2-propyl)-phosphat der Fa. Lanxess GmbH |
| Levagard 3000 | polymeres Reaktionsprodukt aus Phosphorylchlorid, Diethylenglykol und Isobutanol der Fa. Lanxess GmbH |
| Desmodur 44V70L | polymeres Polyisocyanat auf Basis von 4,4'-Diphenylmethandiisocyanat der Fa. Covestro Deutschland AG mit einem NCO-Gehalt von ca. 31,5 Gew.% |
| Tegostab B8443 | Silikonstabilisator der Fa. Evonik Industries AG |
| Vorasurf DC 5357 | Silikonstabilisator der Fa. Dow Silicones Deutschland GmbH |
| Desmorapid 1792 | Katalysator der Fa. Covestro Deutschland AG mit 25 Gew.% Kaliumacetat |

Polycat 520 Aminkatalysator der Fa. Evonik Industries AG auf Basis von Pentamethyldiethylentriamin und Diethylenglykol

Herstellung der Komponente a2-2:

In einen 4 L-4-Halskolben, ausgestattet mit mechanischem Rührwerk, Heizpilz, Sumpfthermometer, Stickstoff-Gasanschluss und Intensivkühler, wurden 375 g (3,8 mol) Maleinsäureanhydrid und 1694 g (16,0 mol) Diethylenglykol eingewogen und bei 80 °C mit Stickstoffbeschleierung gerührt. Nach 5 Stunden wurde ein klares Produkt mit einer Säurezahl von 101 mg KOH/g und einer OH-Zahl von 736 mg KOH/g erhalten.

**Beispiele 1 - 11:-Herstellung von PUR/PIR - Schäumen**

Die Herstellung von PUR/PIR-Hartschäumen auf Basis der in den Tabellen beschriebenen Formulierungen erfolgte mittels Handvermischung im Labormaßstab in Testpäckchen mit Grundfläche $20\times20$ cm$^2$. Die Polyolkomponente enthaltend die Polyole, Additive und Katalysatoren werden vorgelegt. Kurz vor der Vermischung wird die Polyolkomponente auf 23 - 25 °C temperiert, wohingegen die Polyisocyanatkomponente auf eine konstante Temperatur von 30 - 35 °C gebracht wird. Anschließend wird unter Rühren die Polyisocyanatkomponente zur Polyolmischung gegeben, zu der die zur Erreichung einer Kernrohdichte von 38 - 40 kg/m$^3$ benötigte Menge an Pentan zuvor zugewogen worden ist. Die Mischzeit beträgt 6 sec und die Mischgeschwindigkeit des Pendraulik-Rührers beträgt 4200 min$^{-1}$. Der Schaum wird anschließend für weitere 24 Stunden 20 bei 23 °C gelagert, damit dieser nachreagieren kann.

**Tabelle 1: Beispiele 1 - 11 Zusammensetzung der Komponente A und der Reaktionsmischungen sowie der Eigenschaften**

| Beispiel | | 1* | 2* | 3 | 4* | 5 | 6* | 7* | 8* | 9* | 10* | 11 |
|---|---|---|---|---|---|---|---|---|---|---|---|---|
| a1-1 | Teile | 71 | 73,25 | 73,5 | 76,05 | 73,7 | 61,8 | 63,25 | 64,3 | 68 | 65,6 | 63,9 |
| a3-1 | Teile | 10 | 8 | 8 | 8 | 8 | 8 | 8 | 8 | 8 | 9,6 | 9,6 |

(fortgesetzt)

| Beispiel | | 1* | 2* | 3 | 4* | 5 | 6* | 7* | 8* | 9* | 10* | 11 |
|---|---|---|---|---|---|---|---|---|---|---|---|---|
| TCPP | Teile | | | | | | 25 | 25 | 21 | 20 | | |
| TEP | Teile | 14 | 15 | 12 | 12 | 12 | | | | | | |
| Levagard 3000 | Teile | | | | | | | | | | 20 | 20 |
| Wasser | Teile | 0,5 | 0,5 | 0,5 | 0,5 | 0,5 | 0,5 | 0,5 | 0,5 | 0,5 | 0,5 | 0,5 |
| a2-1 | Teile | 1,5 | | 3 | | | 1,7 | | 3,2 | | 1,3 | 3 |
| a2-2 | Teile | | | | | 2,9 | | | | | | |
| Milchsäure | Teile | | 0,25 | | 0,45 | | | 0,25 | | 0,5 | | |
| Tegostab B8443 | Teile | 3 | 3 | 3 | 3 | 3 | 3 | 3 | 3 | 3 | 3 | 3 |
| Polycat 520 | Teile | 1,5 | 1,2 | 1,2 | 1,2 | 1,2 | 1,2 | 1,2 | 1,3 | 1,4 | 1,2 | 1,2 |
| Desmorapid 1792 | Teile | 3 | 3 | 4,3 | 3,5 | 3,2 | 3,4 | 3,1 | 4,5 | 3,8 | 3,5 | 4,7 |
| n-Pentan | Teile | 13,2 | 13,3 | 14,4 | 13,8 | 14,4 | 12,9 | 12,4 | 14,1 | 13,2 | 13,0 | 13,0 |
| Desmodur 44V70 L | Teile | 195 | 196 | 217 | 205 | 217 | 187 | 177 | 210 | 194 | 185 | 201 |
| Index | | 335 | 330 | 330 | 331 | 331 | 330 | 330 | 330 | 330 | 330 | 330 |
| Säurezahl Komponente A | mg KOH/g | 2,9 | 3,0 | 4,3 | 4,3 | 4,4 | 2,9 | 2,8 | 4,4 | 4,5 | 2,6 | 4,2 |
| P-Gehalt Schaum | Gew.-% | 0,8 | 0,82 | 0,64 | 0,66 | 0,64 | 0,79 | 0,81 | 0,63 | 0,63 | 0,88 | 0,83 |
| Startzeit | s | 13 | 12 | 13 | 14 | 14 | 13 | 13 | 14 | 13 | 10 | 11 |
| Abbindezeit | s | 44 | 43 | 42 | 44 | 43 | 43 | 43 | 44 | 44 | 36 | 35 |
| Schaumdichte | kg/m$^3$ | 38,4 | 38,9 | 36,6 | 37,2 | 36,6 | 39,6 | 39,4 | 38,9 | 38,6 | 38,6 | 38,8 |
| Expansion Cone Kalorimeter | mm | 15 | 15 | 5 | 20 | 10 | 5 | 10 | 5 | 10 | 20 | 5 |

(Beispiele mit * sind nicht erfindungsgemäß)

**Tabelle 2: Beispiele 12 - 13 Zusammensetzung der Komponente A und der Reaktionsmischungen sowie der Eigenschaften**

| | | Beispiel 12* | Beispiel 13 |
|---|---|---|---|
| a1 2 | Gew.-T | 21,8 | 20,7 |
| a3-2 | Gew.-T | 30,3 | 28,9 |
| a3-3 | Gew.-T | 13,3 | 12,3 |
| a3-4 | Gew.-T | 14,1 | 13,6 |
| TEP | Gew.-T | 15,2 | 15,8 |
| Wasser | Gew.-T | 0,83 | 0,83 |
| a2-1 | Gew.-T | | 4,9 |
| Milchsäure | Gew.-T | 0,68 | |
| Polycat 520 | Gew.-T | 0,6 | 0,3 |
| Dabco K15 | Gew.-T | 2,5 | 3,0 |
| n-Pentan | Gew.-T | 14,3 | 14,9 |

(fortgesetzt)

|  | | Beispiel 12* | Beispiel 13 |
|---|---|---|---|
| Desmodur 44V70 L | Gew.-T | 242 | 255 |
| Index | | 280 | 280 |
| Säurezahl Komponente A | mg KOH/g | 4,4 | 4,4 |
| P-Gehalt Schaum | Gew.% | 0,75 | 0,75 |
| Startzeit | s | 7 | 7 |
| Abbindezeit | s | 43 | 42 |
| Schaumdichte | kg/m$^3$ | 37,9 | 37,0 |
| Maximale Flammhöhe | mm | 153 | 146 |
| Brandklasse | | F | E |
| Expansion Cone Kalorimeter | mm | 5 | 5 |
| (Beispiele mit * sind nicht erfindungsgemäß) | | | |

Die Beispiele der Tabelle 1 zeigen, dass eine Formulierung A mit der Komponente a2-1 bei gleichem Phosphorgehalt und gleicher Säurezahl zu PUR/PIR-Hartschäumen mit verbessertem Verkohlungsverhalten, ersichtlich durch die reduzierte Expansion der Prüfkörper im Cone Calorimeter, führen, verglichen einer Formulierung, welche statt der Komponente a2-1 Milchsäure enthält. Gleiches gilt für die Formulierung mit der Säurekomponente a2-2.

Das verbesserte Verkohlungsverhalten durch die Säurezahlerhöhung über die Zugabe von Dicarbonsäurehalbester lässt sich jedoch nicht bei einem halogenierten Flammschutzmittel (TCPP) beobachten (Beispiel 6 - 9).

Beispiel 13 versus Beispiel 12* zeigt, dass auch bei Formulierungen mit höheren Polyethergehalten der Einsatz der erfindungsgemäßen Mischungen a2) besser wirkt als der Einsatz von Milchsäure.

## Patentansprüche

1.   Komponente A für die Herstellung von PUR/PIR-Hartschäumen, enthaltend:

**A1)** eine isocyanatreaktive Komponente, enthaltend

**a1)** eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis ≤ 300 mg KOH/g, einer mittleren Funktionalität von 1,8 bis 2,5 und einer Säurezahl von < 5 mg KOH/g, wobei mindestens 50 Gew.-% der Polyolverbindungen a1) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen ist,

**a2)** eine Mischung bestehend aus mindestens einer nicht-esterhaltigen Polyhydroxyverbindung P mit einer mittleren Hydroxylzahl von ≥ 280 bis 1850 mg KOH/g und mindestens einer Verbindung H, welche sowohl über eine Ester - als auch über eine freie Carbonsäurefunktion verfügt, und wobei die Mischung a2) eine mittlere Säurezahl von 10 bis 400 mg KOH/g und eine mittlere Hydroxylzahl von 100 bis 1400 mg KOH/g aufweist,

**a3)** optional weitere Polyole ausgewählt aus Polyesterpolyolen und Polyetheresterpolyolen, welche nicht unter die Definition von a1) und / oder a2) fallen, Polyetherpolyolen, Polyethercarbonatpolyolen, Polyestercarbonatpolyolen,

**a4)** optional niedermolekulare isocyanatreaktive Verbindungen, welche nicht unter die Definition von a1), a2) oder a3) fallen,

**A2)** optional Katalysatoren,
**A3)** optional Wasser,
**A4)** ein bei 25 °C flüssiges, nicht halogeniertes Phosphor-basiertes Flammschutzmittel.
**A5)** optional weitere Hilfsmittel und Zusatzstoffe, die nicht unter die Definition von A1) bis A4) fallen,

wobei die Komponente A eine mittlere Säurezahl [DIN EN ISO 2114 (November 2006)] von ≥ 3,5 mg KOH/g, bevorzugt von 3,5 bis 6 mg KOH/g, aufweist und keine halogenierten Flammschutzmittel enthält.

2. Komponente A gemäß Anspruch 1, enthaltend

> 20 Gew.-%, bevorzugt 45 - 90 Gew.-%, besonders bevorzugt 50 - 80 Gew.-%, bezogen auf die Komponente A, der Komponente a1),
≥ 0 Gew.-%, bevorzugt 1 - 10 Gew.-%, besonders bevorzugt 2 - 5 Gew.-%, bezogen auf die Komponente A, der Komponente a2),
≥ 0 Gew.-%, bevorzugt 1 - 20 Gew.-%, besonders bevorzugt 5 - 15 Gew.-%, bezogen auf die Komponente A, der Komponente a3),
0,0 - 5,0 Gew.-%, bezogen auf die Komponente A, der Komponente a4),
und
0,0 - 5,0 Gew.-%, bezogen auf die Komponente A, der Komponente A2,
0 - 1,2 Gew.-%, bevorzugt 0,3 - 1,0 Gew.-%, bezogen auf die Komponente A, Wasser A3,
> 0 Gew.-%, bevorzugt 5 - 20 Gew.-%, besonders bevorzugt 7 - 15 Gew.-%, bezogen auf die Komponente A, der Komponente A4,
0,0 - 10,0 Gew.-%, bevorzugt 0,0 - 6 Gew.-%, bezogen auf die Komponente A, der Komponente A5.

3. Komponente A gemäß einem der Ansprüche 1 und 2, wobei die Verbindung H in der Komponente a2) ein Umsetzungsprodukt aliphatischer und / oder aromatischer Polycarbonsäuren ohne weitere funktionelle Gruppen aus der Gruppe bestehend aus OH-, SH-, $NH_2$- oder NHR-Gruppen, worin R eine Alkyl-, Cycloalkyl- oder Arylgruppe ist, mit einer Polyhydroxyverbindung P ist.

4. Komponente A gemäß einem der Ansprüche 1 bis 3, wobei die Verbindung H ausgewählt ist aus Halbestern der Maleinsäure, Bernsteinsäure, Adipinsäure, Phthalsäure und / oder Terephthalsäure, insbesondere der Phthalsäure und / oder Maleinsäure, mit einer Polyhydroxyverbindung P.

5. Komponente A gemäß einem der Ansprüche 3 und 4, wobei die Polyhydroxyverbindung P Polyethylenglykol und / oder Diethylenglykol ist.

6. Komponente A gemäß einem der Ansprüche 1 - 5, **dadurch gekennzeichnet, dass** die Komponente a1) ein Polyesterpolyol enthält, welches aus rezykliertem Polyethylenterephthalat hergestellt ist.

7. Komponente A gemäß einem der Ansprüche 1 bis 6, **dadurch gekennzeichnet, dass** es sich bei A4 um Triethylphosphat und / oder um polymere Reaktionsprodukte aus Phosphorylchlorid mit Diethylenglykol handelt.

8. Reaktionsgemisch aus einer isocyanatreaktiven Komponente A gemäß einem der Ansprüche 1 bis 7, einer Polyisocyanatkomponente B und einem physikalischen Treibmittel C, wobei das Reaktionsgemisch eine Kennzahl > 150, insbesondere > 180 aufweist.

9. Reaktionsgemisch gemäß Anspruch 8, wobei das Treibmittel C) ausgewählt ist aus einer oder mehreren halogenfreien chemischen und halogenfreien physikalischen Treibmitteln.

10. Reaktionsgemisch gemäß Anspruch 8 und / oder 9, wobei das Reaktionsgemisch eine Kennzahl > 220, in einer besonders bevorzugten Ausführungsform 290 - 440 beträgt.

11. Verfahren zur Umsetzung eines Reaktionsgemisches aus einer isocyanatreaktiven Komponente A gemäß einem der Ansprüche 1 - 7 mit

B einer Polyisocyanatkomponente
in Gegenwart von
C Treibmittel, enthaltend eine oder mehrere Verbindungen ausgewählt aus der Gruppe bestehend aus halogenfreien chemischen Treibmitteln und halogenfreien physikalischen Treibmitteln.

12. Herstellung von PUR/PIR-Hartschaumstoffen umfassend ein Verfahren gemäß Anspruch 11.

13. PUR/PIR-Hartschaumstoff erhältlich durch ein Verfahren gemäß Anspruch 11 oder 12, insbesondere mit einer

Rohdichte von $\leq 45$ kg/m$^3$.

14. Verwendung eines PUR/PIR-Hartschaumstoffes gemäß Anspruch 13 als Dämmplatte, als Isolationsschaumstoff und/oder als Haftvermittler in Verbundelementen, wobei die Verbundelemente eine den PUR/PIR-Hartschaumstoff umfassende Schicht und mindestens eine Deckschicht umfassen.

15. Verbundelemente gemäß Anspruch 14, welche einen Kern aus einem PUR/PIR-Hartschaumstoff gemäß Anspruch 12 und eine oder zwei Deckschichten enthalten, bevorzugt mindestens eine Metalldeckschicht.

Europäisches
Patentamt

European
Patent Office

Office européen
des brevets

# EUROPÄISCHER RECHERCHENBERICHT

Nummer der Anmeldung

EP 24 17 4329

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/208626 A1 (BASF SE [DE]; BASF CHINA CO LTD [CN]) 2. November 2023 (2023-11-02) * Seite 13, Zeilen 31-32; Ansprüche 1, 2,14,15; Beispiele 1-3; Verbindungen A1, A3 * ----- | 1-15 | INV. C08G18/40 C08G18/42 C08G18/76 C08K5/521 |
| X | EP 3 957 665 A1 (COVESTRO DEUTSCHLAND AG [DE]) 23. Februar 2022 (2022-02-23) * Ansprüche 2,13,14,15; Beispiele 1-16; Verbindungen B4, 1132 * ----- | 1-15 | |

RECHERCHIERTE SACHGEBIETE (IPC)

C08G
C08K

Der vorliegende Recherchenbericht wurde für alle Patentansprüche erstellt

| Recherchenort | Abschlußdatum der Recherche | Prüfer |
|---|---|---|
| München | 24. September 2024 | Buestrich, Ralf |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 4329

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-09-2024

| Im Recherchenbericht angeführtes Patentdokument | Datum der Veröffentlichung | Mitglied(er) der Patentfamilie | Datum der Veröffentlichung |
|---|---|---|---|
| WO 2023208626 A1 | 02-11-2023 | KEINE | |
| EP 3957665 A1 | 23-02-2022 | EP 3957665 A1 | 23-02-2022 |
| | | EP 4200346 A1 | 28-06-2023 |
| | | WO 2022038050 A1 | 24-02-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1288239 A
- EP 1421131 A

- WO 2023208626 A1